Europäisches Patentamt

European Patent Office

Office européen des brevets

(19)

(11) Veröffentlichungsnummer: **0 053 234 B1**

(12) **EUROPÄISCHE PATENTSCHRIFT**

(45) Veröffentlichungstag der Patentschrift:
27.03.85

(51) Int. Cl.⁴: **A 47 J 31/057**, A 47 J 31/10, B 65 D 53/06

(21) Anmeldenummer: **81107766.8**

(22) Anmeldetag: **30.09.81**

(54) **Wärmeisolierender Deckel für eine wärmeisolierende Kaffeekanne.**

(30) Priorität: **28.11.80 DE 3044845**

(43) Veröffentlichungstag der Anmeldung:
**09.06.82 Patentblatt 82/23**

(45) Bekanntmachung des Hinweises auf die Patenterteilung:
**27.03.85 Patentblatt 85/13**

(84) Benannte Vertragsstaaten:
**DE FR GB NL**

(56) Entgegenhaltungen:
**DE - A - 2 540 211
FR - A - 429 599
FR - A - 552 286
US - A - 2 263 610**

(73) Patentinhaber: **Braun Aktiengesellschaft, Rüsselsheimer Strasse 22, D-6000 Frankfurt/Main (DE)**

(72) Erfinder: **Knoll, Dieter, Dr., Wendelinsweg 4, D-6242 Kronberg (DE)**

(74) Vertreter: **Einsele, Rolf, Braun Aktiengesellschaft Postfach 1120 Frankfurter Strasse 145, D-6242 Kronberg Taunus (DE)**

## Beschreibung

Die Erfindung betrifft einen wärmeisolierenden Deckel gemäß dem Oberbegriff des Hauptanspruchs für eine wärmeisolierende Kaffekanne, die insbesondere in elektrischen Kaffeemaschinen verwendet werden kann.

Es sind wärmeisolierende Kaffeekannen für elektrische Kaffeemaschinen bekannt, deren Deckel, während des Brühvorganges abgenommen werden müssen. Dadurch kann während der Zubereitungszeit aus der wärmeisolierenden Kaffeekanne Wärme und vor allem auch Aroma aus dem Kaffee nach oben hin entweichen. Ist der Kaffee zubereitet, so muß nach jedem Ausschenken von Kaffee der Deckel verschlossen und vor dem erneuten Ausgießen wieder geöffnet werden.

Aus der DE-A-2 540 211 ist ein Isolierkannendeckel bekannt, der eine sich automatisch öffnende und schließende Zulauföffnung in Form eines mechanisch betätigbaren Ventils aufweist. Das Ventil und sein Betätigungsmechanismus sind aufwendig in der Herstellung und störanfällig im Gebrauch. Außerdem vermeidet es das Öffnen des Deckels nur während des Füllvorganges, während der Deckel zum Ausschenken nach wie vor geöffnet werden muß.

Der Erfindung liegt die Aufgabe zugrunde, einen Deckel für eine wärmeisolierende Kaffeekanne der eingangs genannten Art derart weiterzubilden, daß er zum Zubereiten und Ausschenken des Kaffees nicht geöffnet werden muß — also beim Füllen und Ausschenken möglichst keine Wärme- und Aromaverluste auftreten läßt — und zu diesem Zweck keinerlei mechanisch beweglicher Teile bedarf.

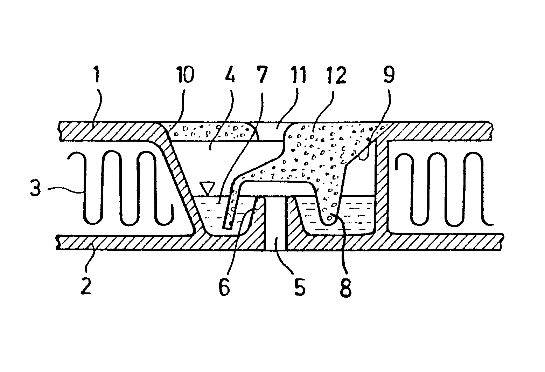

Diese Aufgabe wird erfindungsgemäß durch einen wärmeisolierenden Deckel gelöst, der die Merkmale des kennzeichnenden Teils des Anspruchs 1 aufweist, indem er — wie auch die Zeichnung beispielsweise zeigt — dadurch gekennzeichnet ist, daß die Zulauf- und/oder die Ausgußöffnung eine Kammer 4 aufweist, in der ein Durchlaß 5 zum Inneren der wärmeisolierenden Kaffeekanne mit hochgezogenem Rand 6 angeordnet ist, über den ein glockenförmiges, den hochgezogenen Rand 6 umgreifendes Bauteil 8, nach Art eines Siphons gestülpt ist, das sich an der Mantelfläche 10 der Kammer 4 abstützt.

Dieser erfindungsgemäße wärmeisolierende Deckel besitzt einen permanenten Aroma- und Wärmeverschluß, der dadurch entsteht, daß — wenn durch die Öffnung 11, die Kammer 4 und den Durchlaß 5 Kaffee in die Kaffeekanne fließt — in der Kammer 4 immer eine Sperrschicht aus Kaffee zurückbleibt, deren Höhe durch die Höhe des den Durchlaß 5 umgebenden hochgezogenen Randes bestimmt ist und die den Ringspalt zwischen dem hochgezogenen Rand 6 und dem glockenförmigen Bauteil 8 verschließt.

Vorzugsweise besitzt die Kammer 4 eine kegelförmige Mantelfläche 10, auf der sich ein Fortsatz 12 des glockenförmigen Bauteils 8 mit einem Teil seiner Außenfläche 9 abstützt. Dieser Aufbau ermöglicht das leichte Entnehmen des beispielsweise durch Einklipsen befestigen glockenförmigen Bauteils und damit eine leichte Reinigung der Deckelöffnung.

In einer besonders vorteilhaften Ausführungsform weist das glockenförmige Bauteil 8 einen deckelartigen Fortsatz 12 auf, dessen umlaufender Rand an der Oberkante der Mantelfläche 10 der Kammer 4 dichtend anliegend befestigt ist und der im Abstand von seinem umlaufenden Rand — beispielsweise zentrisch — eine Durchlaßöffnung 11 besitzt. Durch diese Maßnahme wird verhindert, daß die die Sperrschicht in der Zulauföffnung des erfindungsgemäßen wärmeisolierenden Deckels bildende Kaffeemenge beim Ausschenken von Kaffee infolge der damit verbundenen Schräglage der Kaffeekanne ausläuft, so daß ihre siphonartige Sperrwirkung erhalten bleibt.

Es ist ohne weiteres erkennbar, daß sich die beschriebene Durchflußöffnung des erfindungsgemäßen wärmeisolierenden Deckels sowohl für den Kaffeezulauf als auch zum Ausschenken des Kaffees eignet. Besonders zweckmäßig ist es jedoch, beide Funktionen in einer Öffnung zu vereinigen.

Im übrigen kann der erfindungsgemäße wärmeisolierende Deckel in an sich bekannter Weise ausgebildet sein und zum Beispiel eine Deckeloberschale 1 und eine Unterschale 2 sowie einen zwischen diesen beiden Schalen eingeschlossene Isolierschicht 3 aufweisen.

## Patentansprüche

1. Wärmeisolierender Deckel für eine wärmeisolierende Kaffeekanne, der mindestens eine dichtend verschließbare Öffnung für den Zulauf bzw. zum Ausgießen des Kaffees besitzt, dadurch gekennzeichnet, daß die Zulauf- und/oder die Ausgußöffnung eine Kammer (4) aufweist, in der ein Durchlaß (5) zum Inneren der Kaffeekanne mit hochgezogenem Rand (6) angeordnet ist, über den ein glockenförmiges, den hochgezogenen Rand (6) umgreifendes Bauteil (8) nach Art eines Siphons gestülpt ist, das sich an der Mantelfläche (10) der Kammer (4) abstützt.

2. Wärmeisolierender Deckel nach Anspruch 1, dadurch gekennzeichnet, daß die Kammer (4) eine kegelförmige Mantelfläche (10) besitzt, auf der sich ein Fortsatz (12) des glockenförmigen Bauteils (8) mit einem Teil seiner Außenfläche (9) abstützt.

3. Wärmeisolierender Deckel nach Anspruch 1 oder 2, dadurch gekennzeichnet, daß das glockenförmige Bauteil (8) einen deckelartigen Fortsatz (12) aufweist, dessen umlaufender Rand an der Oberkante der Mantelfläche (10) der Kammer (4) dichtend anliegend befestigt ist und der im Abstand von seinem umlaufenden Rand eine Durchlaßöffnung (11) besitzt.

4. Wärmeisolierender Deckel nach einem der Ansprüche 1 bis 3, dadurch gekennzeichnet, daß die Zulauföffnung zugleich als Ausgußöffnung ausgebildet ist.

## Claims

1. Thermally insulating top for a thermally insulating coffee pot, having at least one sealingly closable opening for the intake and/or for pouring out of coffee, characterized in that the intake and/or the pouring-out opening has a chamber (4), in which is provided a passage (5) toward the interior of the coffee pot with a raised rim (6), over which a bell-shaped component (8) is arranged in the manner of a siphon which engages round the raised rim (6) and which is supported on the circumferential surface (10) of the chamber (4).

2. Thermally insulating top according to claim 1, characterized in that the chamber (4) has a conical circumferential surface (10), on which is supported part of the outer face (9) of an extension (12) of the bell-shaped component (8).

3. Thermally insulating top according to claim 1 or 2, characterized in that the bell-shaped component (8) has a cover-like extension (12), whose all-round rim is fixed in tightly fitting manner to the upper edge of the circumferential surface (10) of the chamber (4) and which has a passage opening (11) at a distance from its all-round rim.

4. Thermally insulating top according to one of the claims 1 to 3, characterized in that the intake opening is simultaneously constructed as the pouring-out opening.

## Revendications

1. Couvercle isolant de la chaleur pour un pot à café à isolation thermique, qui possède au moins une ouverture pouvant être fermée à joint étanche pour charger le café et/ou verser le café, caractérisé en ce que l'ouverture de chargement et/ou verseuse présente une chambre (4) dans laquelle est ménagé un passage (5) donnant sur le volume intérieur du pot à café, ce passage présentant un bord relevé (6) par dessus lequel est retourné à la façon d'un siphon un élment (8) en forme de cloche qui entoure le bord relevé (6) et qui s'appuie contre la surface latérale (10) de la chambre (4).

2. Couvercle isolant thermique selon la revendication 1, caractérisé en ce que la chambre (4) possède une surface latérale conique (10) sur laquelle un prolongement (12) de l'élément (8) en forme de cloche s'appuie par une partie de sa surface externe (9).

3. Couvercle isolant thermique selon la revendication 1 ou 2, caractérisé en ce que l'élément (8) en forme de cloche présente un prolongement (12) en forme de couvercle dont le bord périphérique est fixé en appui à joint étanche contre le bord supérieur de la surface latérale (10) de la chambre (4) et qui possède une ouverture de passage (11) située à une certaine distance de son bord périphérique.

4. Couvercle isolant thermique selon l'une des revendications 1 à 3, caractérisé en ce que l'ouverture de chargement forme en même temps l'ouverture verseuse.